# EUROPÄISCHE PATENTSCHRIFT

(11) **EP 2 105 711 B1**
(45) Veröffentlichungstag und Bekanntmachung des Hinweises auf die Patenterteilung: **15.10.2014**
(21) Anmeldenummer: 09003154.3
(22) Anmeldetag: 05.03.2009
(51) Int. Cl.: G01D 4/08, G01D 4/18

(54) **Anordnung zur Energieerfassung und Anzeige in der Gebäudesystemtechnik**
Assembly for generating energy and display in building system technology
Agencement de détection d'énergie et d'affichage dans l'ingénierie des systèmes de bâtiments

(30) Priorität: 28.03.2008 DE 102008016034
(43) Veröffentlichungstag der Anmeldung: 30.09.2009
(73) Patentinhaber: ABB AG, 68309 Mannheim (DE)
(72) Erfinder: Schallenberg, Wolfgang, Dipl.-Ing., 40599 Düsseldorf (DE); Wieske, Stefan, Dipl.-Ing., 58285 Gevelsberg (DE); Zapp, Robert, Dipl.-Ing., 58579 Schalksmühle (DE); Schramm, Peter, Dr.-Ing., 44269 Dortmund (DE)

(56) Entgegenhaltungen:
- EP-A2- 0 948 113
- EP-A2- 1 881 649
- WO-A1-2004/003772
- US-A1- 2003 004 660
- US-A1- 2005 065 742

## Beschreibung

Die Erfindung betrifft eine Anordnung zur Energieerfassung und Anzeige in der Gebäudesystemtechnik.

Aus der DE 197 32 565 C1 ist ein System zur energie- und tarifabhängigen Steuerung von elektrischen Leistungsverbrauchern bekannt, welches eine Kommunikations- und Steuereinheit besitzt, die für die Übertragung von Mess- und/oder Steuerdaten mit einem Leistungsverbraucher sowie mit einer Leitstelle zumindest eines Leistungsanbieters in Verbindung steht. Über die Steuereinheit ist eine unmittelbare oder mittelbare Steuerung des Leistungsverbrauchers durch von der Leitstelle gelieferte Steuerdaten möglich.

Der Erfindung liegt die Aufgabe zugrunde, eine einfache und kostengünstige Anordnung zur Energieerfassung und Anzeige in der Gebäudesystemtechnik anzugeben.

Diese Aufgabe wird erfindungsgemäß durch eine Anordnung zur Energieerfassung und Anzeige in der Gebäudesystemtechnik gelöst, mit einem Hausbussystem, welches über eine Busleitung mit Tastsensoreinheiten und Aktoren zur Ansteuerung von Verbrauchern verbunden ist und zumindest eine Anzeigeeinrichtung aufweist, wobei ein elektrischer Energiezähler des dem Hausbussystem zuordenbaren Energienetzes ein dem aktuellen Energieverbrauch entsprechendes Signal einer Inbetriebnahme-Schnittstelle dieses Hausbussystems zuleitet und wobei die zumindest eine Anzeigeeinrichtung diesen Energieverbrauch zur Anzeige bringt.

Die mit der Erfindung erzielbaren Vorteile liegen insbesondere darin, dass die vorgeschlagene Anordnung zur Energieerfassung und Anzeige in der Gebäudesystemtechnik den aktuellen Energieverbrauch transparent macht und somit dazu verhilft, einen unnötigen Energieverbrauch zu vermeiden und eine Verbrauchsoptimierung zu erzielen.

Vorteilhafte Ausgestaltungen der Erfindung sind in den Unteransprüchen gekennzeichnet.

Die Erfindung wird anhand der in der Zeichnung dargestellten Ausführungsbeispiele erläutert. Es zeigen:
- Fig. 1: eine erste Ausführungsform einer Anordnung zur Energieerfassung und Anzeige in der Gebäudesystemtechnik,
- Fig. 2: eine zweite Ausführungsform einer Anordnung zur Energieerfassung und Anzeige in der Gebäudesystemtechnik.

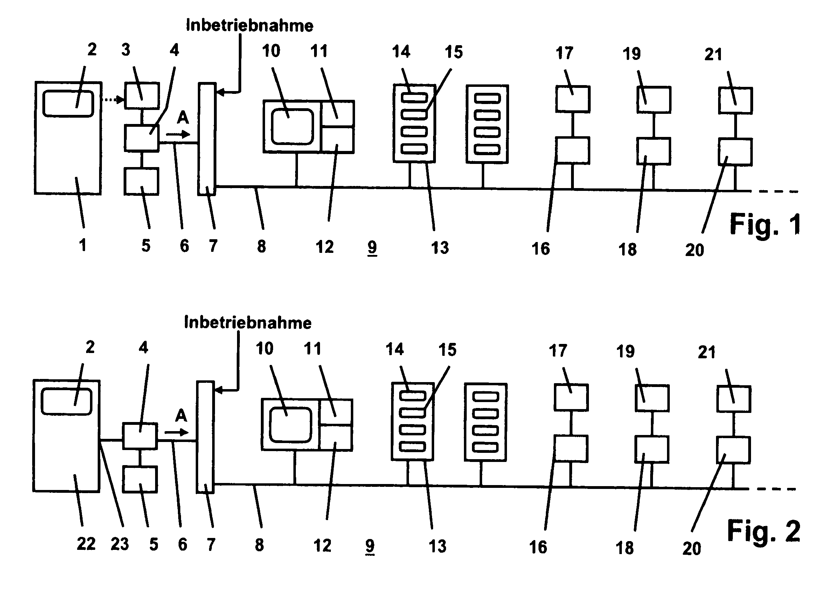

In Fig. 1 ist eine erste Ausführungsform einer Anordnung zur Energieerfassung und Anzeige in der Gebäudesystemtechnik (z. B. KNX) dargestellt. Es ist ein elektrischer Energiezähler 1, insbesondere ein Ferraris-Zähler, zu erkennen, dessen visuelles Anzeigefeld 2, insbesondere eine Drehscheibe mit roter Farbmarkierung oder eine den Energieverbrauch anzeigende mechanische Ziffernanzeige, mit Hilfe einer optischen Ausleseeinheit 3 überwacht wird. Als optische Ausleseeinheit 3 kann z. B. eine auf das transparente Sichtfenster des Energiezählers 1 geklebte Reflexlichtschranke dienen, welche auf die rote Farbmarkierung der Drehscheibe reagiert und dementsprechend bei jeder Umdrehung der Drehscheibe des Ferrariszählers einen Impuls erzeugt, wobei diese Impulse von einer Elektronikschaltung 4 erfasst und unter Verwendung eines Speichers 5 aufsummiert werden.

Als optische Ausleseeinheit 3 kann alternativ hierzu auch eine einen Ziffernwechsel eines mechanischen Zählwerks erkennende Vorrichtung dienen, welche ebenfalls mit der Elektronikschaltung 4 und dem Speicher 5 zusammenarbeitet und derart den momentanen Energieverbrauch eines Wechselspannungsnetzes eines Gebäudes erfasst und meldet. Insbesondere ist es möglich, die detektierten Impulse während eines vorgebbaren Zeitraumes aufzusummieren und abzuspeichern, bis eine Abfrage erfolgt.

Die Elektronikschaltung 4 gibt ein dem aktuellen Energieverbrauch entsprechendes Signal A (gezählte Impulse pro Zeiteinheit) an eine Inbetriebnahme-Schnittstelle 7 eines Hausbussystems 9 ab. Dabei erfolgt die Signalübertragung zwischen Elektronikschaltung 4 und Inbetriebnahme-Schnittstelle 7 vorzugsweise über eine RS-232-oder USB-Leitung 6. Vorteilhaft erfolgt die Energieversorgung der optischen Ausleseeinheit 3, der Elektronikschaltung 4 und des Speichers 5 über die Inbetriebnahme-Schnittstelle 7, so dass der Einsatz eines separaten Netzteils hierfür entbehrlich ist.

Die Inbetriebnahme-Schnittstelle 7 wird für die Inbetriebnahme des Hausbussystems 9 in der elektrischen Verteilung (Zählerverteiler bzw. Verteilerschrank mit Zählerfeld, Verteilerfeld und Kabelanschlusskästen) in Form einer RS-232- oder USB-Schnittstelle installiert und während der Inbetriebnahme mit einem PC oder Laptop verbunden, um derart das Hausbussystem unter Einsatz einer speziellen Software in Betrieb zu nehmen. Über die Inbetriebnahme-Schnittstelle 7 wird der gesamte Datenaustausch während der Inbetriebnahmephase des Hausbussystems abgewickelt. Ein Beispiel für eine derartige Inbetriebnahme-Schnittstelle 7 ist im Busch-Jaeger Elektro GmbH Katalog 2007, BJE 0001-0-1058/11.06/0502B, dpi 402416, Seite 412, "REG-Schnittstelle USB" und "Schnittstelle RS-232" zu finden.

Die Inbetriebnahme-Schnittstelle 7 hat üblicherweise im normalen Betrieb des Hausbussystems 9 nach abgeschlossener Inbetriebnahme keine Funktion mehr, verbleibt jedoch in der Verteilung installiert, um nachträgliche Änderung betreffend die Hausbussystem-Installation ohne Aufwand vornehmen zu können. Erfindungsgemäß wird vorgeschlagen, diese Inbetriebnahme-Schnittstelle 7 für die Eingabe des aktuellen Energieverbrauchs in das Hausbussystem dann zu nutzen, wenn sie für die Inbetriebnahme nicht mehr benötigt wird.

Ausgangsseitig ist die Inbetriebnahme-Schnittstelle 7 mit einer Busleitung 8, vorzugsweise EIB-Leitung, mit verschiedenen Busteilnehmern des Hausbussystems verbunden, insbesondere einem Controlpanel (Display, Touchscreen) 10, mehreren Tastsensoreinheiten 13 und mehreren Aktoren 16 bzw. 18 bzw. 20, welche zur Ansteuerung / Versorgung von angeschlossenen Verbrauchern 17 bzw. 19 bzw. 21, z. B. Beleuchtungsanlagen und Jalousien, dienen.

Die Tastsensoreinheiten 13 weisen jeweils mehrere Bedienwippen 14 zur Ansteuerung von einzelnen Verbrauchern auf. Zumindest eine Tastsensoreinheit 13 weist darüber hinaus ein Anzeigefeld 15 zur Anzeige des aktuellen Wertes des Energieverbrauchs auf.

Bevorzugtes Anzeigemittel zur Anzeige des aktuellen Energieverbrauchs ist das Controlpanel 10, welches beispielsweise die Anzeige des Energieverbrauchs in Form einer Grafik ermöglicht. Das Controlpanel 10 besitzt eine Elektronikschaltung (Mikroprozessor) 11 inklusive Speicher 12, wodurch neben der Anzeige des aktuellen Energieverbrauchs auch eine Auswertung des erfassten Energieverbrauchs nach vorgebbaren Kriterien erfolgen kann. Ferner können am Controlpanel 10 beliebige Eingaben erfolgen und Werte eingegeben werden, wie z. B. Zeiten und Energiewerte. Beispielsweise sind folgende besondere Betriebsweisen erzielbar:
1. Es können Zeiten vorgegeben werden, zu denen automatisch das Auslösen einer Übertragung der in Elektronikschaltung 4 / Speicher 5 aufsummierten Impulse (Abfrage) erfolgt.
2. Es können gewünschte Energieverbrauchs-Profile mit innerhalb vorgebbarer Zeitspannen gewünschten Maximal-Grenzwerten definiert und eingegeben werden.
3. Es kann eine Bewertung der durch das Hausbussystem 9 ansteuerbaren Verbraucher erfolgen, um derart "unkritische" Verbraucher zu definieren, die zeitweise über das Hausbussystem 9 abzuschalten sind, sobald der aktuelle Energieverbrauch einen Maximal-Grenzwert überschreitet - siehe hierzu Ziffer 2. Als Beispiele für derartige "unkritische" Verbraucher sind zu nennen: Warmwasseraufbereitungsanlagen, Elektroheizungen inklusive elektrisch betriebener Wärmepumpen, Gefriergeräte.
4. Es kann individuell der Energieverbrauch einzelner über das Hausbussystem 9 geschalteter Verbraucher ermittelt werden, da sowohl das Einschaltsignal als auch das Ausschaltsignal für jeden einzelnen Verbraucher über die Busleitung 8 zur Verfügung gestellt werden: Zu dem Einschaltsignal für den Verbraucher wird die korrespondierende Erhöhung des Energieverbrauchs erfasst. Nach dem Abschalten des Verbrauchers endet die Erfassungszeit. Auf diese Weise kann der Verbrauch eines einzelnen Geräts individuell ermittelt werden.
5. Durch mehrmaliges Messen nach der unter Ziffer 4. beschriebenen Art kann durch Mittelwertbildung die Genauigkeit verbessert werden.

In Fig. 2 ist eine zweite Ausführungsform einer Anordnung zur Energieerfassung und Anzeige in der Gebäudesystemtechnik dargestellt. Bei dieser Ausführungsform wird ein elektrischer Energiezähler 22 verwendet, welcher ausgangsseitig eine integrierte Impulsschnittstelle oder eine serielle Datenschnittstelle 23 zur Verfügung stellt. Diese Schnittstelle 23 ist mit der Elektronikschaltung 4 und dem Speicher 5 verbunden, um das Signal A entsprechend dem aktuellen Energieverbrauch unmittelbar zu bilden und der Inbetriebnahme-Schnittstelle 7 zuzuführen. Die weitere Anordnung ist wie unter Fig. 1 erläutert.

### Bezugszeichenliste

- 1: elektrischer Energiezähler (z. B. Ferraris-Zähler)
- 2: visuelles Anzeigefeld (Drehscheibe und/oder Ziffernanzeige)
- 3: Optische Ausleseeinheit (Reflexlichtschranke)
- 4: Elektronikschaltung
- 5: Speicher
- 6: Signalübertragung, vorzugsweise über RS-232 / USB-Leitung
- 7: Inbetriebnahme-Schnittstelle (RS-232 / USB)
- 8: Busleitung, vorzugsweise EIB-Leitung
- 9: Hausbussystem
- 10: Controlpanel (Display)
- 11: Elektronikschaltung (Mikroprozessor)
- 12: Speicher
- 13: Tastsensoreinheit
- 14: Bedienwippen
- 15: Anzeigefeld
- 16: Aktor
- 17: Verbraucher
- 18: Aktor
- 19: Verbraucher
- 20: Aktor
- 21: Verbraucher
- 22: elektrischer Energiezähler
- 23: integrierte Impulsschnittstelle / serielle Datenschnittstelle
- A: Signal entsprechend dem aktuellen Energieverbrauch

## Patentansprüche

1. Anordnung zur Energieerfassung und Anzeige in der Gebäudesystemtechnik, mit einem Hausbussystem (9), welches über eine Busleitung (8) mit Tastsensoreinheiten (13) und Aktoren (16, 18, 20) zur Ansteuerung von Verbrauchern (17, 19, 21) verbunden ist und zumindest eine an die Busleitung (8) angeschlossene Anzeigeeinrichtung (10, 15) aufweist, wobei ein elektrischer Energiezähler (1, 22) des dem Hausbussystem (9) zuordenbaren Energienetzes ein dem aktuellen Energieverbrauch entsprechendes Signal (A) einer an die Busleitung (8) angeschlossene Inbetriebnahme-Schnittstelle (7) dieses Hausbussystems (9) zuleitet und wobei die zumindest eine Anzeigeeinrichtung (10, 15) diesen Energieverbrauch zur Anzeige bringt, wobei vom elektrischen Energiezähler (1, 22) erzeugte Impulse unter Einsatz einer Elektronikschaltung (4) erfasst und unter Verwendung eines Speichers (5) aufsummiert werden und die Elektronikschaltung (4) Signale einer optischen Ausleseeinheit (3) erhält, welche ein visuelles Anzeigefeld (2) des Energiezählers (1) überwacht.

2. Anordnung nach Anspruch 1, wobei die optische Ausleseeinheit (3) bei jeder Umdrehung der Drehscheibe eines als Energiezähler (1) eingesetzten Ferraris-Zählers einen Impuls erzeugt.

3. Anordnung nach Anspruch 1, wobei als optische Ausleseeinheit (3) eine Vorrichtung dient, welche einen Ziffernwechsel einer den Energieverbrauch anzeigenden mechanischen Ziffernanzeige erkennt und dementsprechend einen Impuls erzeugt.

4. Anordnung nach einem der vorstehenden Ansprüche, wobei eine Anzeige des Energieverbrauchs in einem in einer Tastsensoreinheit (13) angeordneten Anzeigefeld (15) erfolgt.

5. Anordnung nach einem der vorstehenden Ansprüche, wobei eine Anzeige des Energieverbrauchs in einem Controlpanel (10) des Hausbussystems (9) erfolgt.

6. Anordnung nach Anspruch 5, wobei das Controlpanel (10) mit einer Elektronikschaltung (11) inklusive Speicher (12) ausgerüstet ist.

7. Anordnung nach Anspruch 6, wobei eine Bewertung der durch das Hausbussystem (9) ansteuerbaren Verbraucher erfolgt, um derart "unkritische" Verbraucher festzulegen, die zeitweise abzuschalten sind, sobald der Energieverbrauch einen definierbaren Maximal-Grenzwert überschreitet.

8. Anordnung nach Anspruch 6, wobei parallel zu einem Einschaltsignal eines Verbrauchers die korrespondierende Erhöhung des Energieverbrauchs erfassbar ist, dass nach dem Abschalten dieses Verbrauchers die Erfassungszeit endet und dass folglich der Energieverbrauch dieses Verbrauchers während der Erfassungszeit ermittelbar ist.

## Claims

1. Arrangement for energy recording and display in buildings system engineering, having a building bus system (9) that is connected via a bus line (8) to touch sensor units (13) and actuators (16, 18, 20) for actuating loads (17, 19, 21) and has at least one display device (10, 15) connected to the bus line (8), wherein an electrical energy meter (1, 22) for the energy network that can be associated with the building bus system (9) supplies a signal (A) that corresponds to the present energy consumption to a start-up interface (7) of this building bus system (9), which interface is connected to the bus line (8), and wherein the at least one display device (10, 15) displays this energy consumption, wherein pulses produced by the electrical energy meter (1, 22) are recorded using an electronic circuit (4) and are summed using a memory (5), and the electronic circuit (4) receives signals from an optical reading unit (3) that monitors a visual display panel (2) of the energy meter (1).

2. Arrangement according to Claim 1, wherein the optical reading unit (3) produces a pulse upon every revolution of the dial of a Ferrari's meter that is used as an energy meter (1).

3. Arrangement according to Claim 1, wherein the optical reading unit (3) used is an apparatus that recognizes a digit change in a mechanical numeric display indicating the energy consumption and accordingly produces a pulse.

4. Arrangement according to one of the preceding claims, wherein the energy consumption is displayed in a display panel (15) arranged in a touch sensor unit (13).

5. Arrangement according to one of the preceding claims, wherein the energy consumption is displayed in a control panel (10) of the building bus system (9).

6. Arrangement according to Claim 5, wherein the control panel (10) is equipped with an electronic circuit (11), including a memory (12).

7. Arrangement according to Claim 6, wherein the loads that can be actuated by the building bus system (9) are rated in order to stipulate such "non-critical" loads as can be intermittently switched off as soon as the energy consumption exceeds a definable maximum limit value.

8. Arrangement according to Claim 6, wherein in parallel with a switch-on signal for a load the corresponding increase in the energy consumption can be recorded, the recording time ends after this load is switched off and therefore the energy consumption of this load during the recording time can be ascertained.

## Revendications

1. Dispositif de détection d'énergie et d'affichage dans l'ingénierie des systèmes de bâtiment, comportant un système de bus domestique (9) qui est connecté par l'intermédiaire d'une liaison de bus (8) à des unités à capteurs tactiles (13) et à des actionneurs (16, 18, 20) pour commander des charges (17, 19, 21) et au moins un dispositif d'affichage (10, 15) connecté à la ligne de bus (8), dans lequel un compteur d'énergie électrique (1, 22) du réseau d'énergie électrique pouvant être associé au système de bus domestique (9) transmet un signal (A) correspondant à la consommation d'énergie actuelle d'une interface de mise en service (7) dudit système de bus domestique (9) connectée à la ligne de bus (8) et dans lequel l'au moins un dispositif d'affichage (10, 15) provoque l'affichage de cette consommation d'énergie, dans lequel des impulsions générées par le compteur d'énergie électrique (1, 22) sont détectées au moyen d'un circuit électronique (4) et sont sommées par utilisation d'une mémoire (5) et le circuit électronique (4) obtient des signaux d'une unité de lecture optique (3) qui surveille un champ d'affichage visuel (2) du compteur d'énergie (1).

2. Dispositif selon la revendication 1, dans lequel l'unité de lecture optique (3) génère une impulsion à chaque rotation du disque tournant d'un compteur Ferrari utilisé en tant que compteur d'énergie (1).

3. Dispositif selon la revendication 1, dans lequel on utilise en tant qu'unité de lecture optique (3) un dispositif qui détecte un changement de chiffres d'un affichage numérique mécanique affichant la consommation d'énergie et génère une impulsion correspondant à celui-ci.

4. Dispositif selon l'une quelconque des revendications précédentes, dans lequel un affichage de la consommation d'énergie est effectué dans un champ d'affichage (15) disposé dans une unité à capteur tactile (13).

5. Dispositif selon l'une quelconque des revendications précédentes, dans lequel un affichage de la consommation d'énergie est effectué dans un panneau de commande (10) du système de bus domestique (9).

6. Dispositif selon la revendication 5, dans lequel le panneau de commande (10) est muni d'un circuit électronique (11) comportant une mémoire (12).

7. Dispositif selon la revendication 6, dans lequel une évaluation des charges pouvant être commandées par le système de bus domestique (9) est effectuée de manière à établir des charges "non critiques" qui doivent être déconnectées temporairement dès qu'une consommation d'énergie dépasse une valeur de seuil maximale pouvant être définie.

8. Dispositif selon la revendication 6, dans lequel, parallèlement à un signal de mise en fonctionnement d'une charge, l'augmentation correspondante de la consommation d'énergie peut être détectée de telle manière qu'après la déconnexion de ladite charge, la période de détection se termine et par conséquent, que la consommation d'énergie de ladite charge puisse être déterminée pendant la période de détection.
